# EUROPEAN PATENT SPECIFICATION

(11) **EP 4 110 870 B1**
(45) Date of publication and mention of the grant of the patent: **07.06.2023**
(21) Application number: 20730487.4
(22) Date of filing: 26.05.2020
(51) Int. Cl.: C08L 95/00

(54) **ASPHALTIC MIXTURE CONDITIONER, CONDITIONED ASPHALTIC PAVING MIXTURE, THEIR PROCESSES OF PREPARATION, THEIR USES IN PAVING SURFACES, PAVED SURFACES AND SYSTEM TO PREPARE AN ASPHALTIC MIXTURE CONDITIONER**
ASPHALTMISCHKONDITIONIERER, KONDITIONIERTES ASPHALTIERGEMISCH, VERFAHREN ZU SEINER HERSTELLUNG, VERWENDUNGEN IN PFLASTERFLÄCHEN, PFLASTERFLÄCHEN UND SYSTEM ZUR HERSTELLUNG
CONDITIONNEUR DE MÉLANGE ASPHALTIQUE, MÉLANGE DE PAVAGE ASPHALTIQUE CONDITIONNÉ, LEURS PROCÉDÉS DE PRÉPARATION, LEURS UTILISATIONS DANS DES SURFACES DE PAVAGE, SURFACES PAVÉES ET SYSTÈME POUR PRÉPARER UN CONDITIONNEUR DE MÉLANGE ASPHALTIQUE

(43) Date of publication of application: 04.01.2023
(73) Proprietor: Asfalto Liquido Tecnologia Extrema Altex Sociedad Anonima, San José (CR)
(72) Inventor: DELGADO BARROETA, Romher Gerardo, San Cristóbal, Táchira (VE)
(74) Representative: Monteiro Alves, Inês
(86) International application number: PCT/IB2020/054992
(87) International publication number: WO 2021/240216

(56) References cited:
- CN-A- 109 486 421
- US-A- 3 764 359
- US-B1- 9 856 377

## Description

### Technical Field

The present invention refers to an asphaltic mixture conditioner, employed as an additive into a conditioned asphaltic paving mixture. The present invention also refers to a conditioned asphaltic paving mixture and its processes of preparation, wherein said composition is an asphalt paving composition, which is used to pave surfaces.

### Background Art

The paving compositions made of asphalt may be produced in a plant that mixes and heats aggregates and bitumen into a composite mixture. The asphalt plants can be fixed plants or mobile mixing plants. The hot asphalt mixes are generally produced at a temperature between 130 °C and 180 °C in the asphalt plants.

Several bituminous paving compositions that may be used as hot asphalt mixes, which are known in the prior art, have features making unfeasible the storage of hot asphalt mixes batches produced, because the material may become harder beyond the desired and specified values for application, which prevents the proper paving onto a surface. Therefore, a plurality of asphalt plants is installed nearby the areas, where the surfaces will be paved, or a plurality of mobile mixing plants is put in operation, resulting in smaller batches produced according to the specific amounts of paving composition to be used in situ, resulting in higher associated fixed and variable costs of production. Moreover, the necessity of making operational a plurality of asphalt plants may boost several environmental damages.

In order to stablish an alternative to the operation of a plurality of asphalt plants, the international patent application WO2014128517A1 (Aniser Corp. LCC, 28 August 2014, abstract and description) aims to develop a bituminous paving composition comprising an additive composition, which allows longer storage periods for the bituminous paving composition produced. However, the additive composition revealed in WO2014128517A1 has very high dynamic viscosity values, about 200,000 cP (200 Pa.s), measured at 60 °C, which difficult the handling and mixing of said additive composition into the final asphalt mix. In order to make possible a proper mixing, a heating step of the additive composition is required, wherein the temperature of the additive shall be raised to 80°C, at least. The heating step of the additive has a first drawback related to an extra energetic input for the process, making the final operational costs higher and demanding more complex equipments, in order to make the additive sufficiently flowable to be added to the composite mix of aggregate and bitumen. Another drawback is referred to an undesirable evolution of contaminants present in the additive, mainly derived from the component coking carbon, which is handled in the form of very fine particles or dust. Therefore, the process revealed in WO2014128517A1 requires the installation of further equipments to retain these contaminants and mitigating coal pollution but contributing to raising of the plant operational costs.

### Technical Problem

Therefore, there exists a great interest and need to create an additive to be added into a composite mix of aggregate and bitumen (asphaltic mixture) that would allow long storage periods, and would keep its technical characteristics to remain it loose and manageable at room temperature, and also would make its production process technically and economically feasible, making unnecessary to install a plurality of fixed or mobile asphalt mixing plants. Moreover, there exists a great interest and need to create an additive that may be handled at ambient temperature in a more efficient and environmentally safe way.

### Summary of Invention

In a first aspect, the present invention refers to an Asphaltic Mixture Conditioner comprising:
a) a bitumen having a dynamic viscosity equal or greater than 35,000 cP (35 Pa.s), measured at 60 °C, and an API gravity equal or greater than 10 degrees, wherein the bitumen is in an amount from 50 to 75% by total weight of the said asphaltic mixture conditioner;
b) a polyol having from 2 to 8 carbon atoms, in an amount from 2 to 6% by total weight of the said asphaltic mixture conditioner;
c) a surfactant, wherein the surfactant comprises a cationic surfactant, a non-ionic surfactant, or any combinations thereof, in an amount from 0.05 to 0.4% by total weight of the said asphaltic mixture conditioner;
d) a mineral acid, in an amount to adjust the pH of the aqueous phase in the asphaltic mixture conditioner in the range from about 2 to about 4;
e) water in an amount to complete the asphaltic mixture conditioner.

The present invention, in a second aspect, refers to a Conditioned Asphaltic Paving Mixture comprising:
a) an asphaltic mixture conditioner in an amount from 1 to 5% by total weight of the said conditioned asphaltic paving mixture, wherein the bitumen comprised in the said asphaltic mixture conditioner is a first portion of bitumen;
b) a second portion of bitumen having a dynamic viscosity equal or greater than 35,000 cP (35 Pa.s), measured at 60 °C, and an API gravity equal or greater than 10 degrees, wherein the second portion of bitumen is in an amount from 2 to 8% by total weight of the said conditioned asphaltic paving mixture;
c) aggregate, in an amount from 87 to 97% by total weight of the said conditioned asphaltic paving mixture.

The present invention, in a third aspect, refers to a paved surface comprising a layer of the conditioned asphaltic paving mixture.

The present invention, in a fourth aspect, refers to a method of producing the conditioned asphaltic paving mixture comprising the steps:
a) Providing a mixture of a polyol, a surfactant, a mineral acid and water, wherein the mixture occurs at a temperature in a range from 70 to 80 °C;
b) Providing a mixture of the composition, obtained in step a), with a first portion of bitumen, having a dynamic viscosity equal or greater than 35,000 cP (35 Pa.s), measured at 60 °C, and an API gravity equal or greater than 10 degrees, wherein the first portion of bitumen is at a temperature in a range from 100 to 150 °C, obtaining the asphaltic mixture conditioner of any one of the claims 1 to 7;
c) Reducing the temperature of the asphaltic mixture conditioner, obtained in step b), to the ambient temperature;
d) Providing a mixture of a second portion of bitumen having a dynamic viscosity equal or greater than 35,000 cP (35 Pa.s), measured at 60 °C, and an API gravity equal or greater than 10 degrees with aggregate, wherein the mixture occurs at a temperature from 130°C to 170 °C;
e) Providing a mixture of the asphaltic mixing, obtained in the step c), which is maintained at ambient temperature, with the mixture of step d), wherein the final mixture is maintained in a temperature range from 130°C to 170°C, resulting in the conditioned asphaltic paving mixture;
f) Performing a controlled cooling of the conditioned asphaltic paving mixture, obtained in step e), until ambient temperature;
g) Storing the conditioned asphaltic paving mixture, obtained in step f) at ambient temperature until being applied onto a surface to be paved.

The present invention, in a fifty aspect, refers to a use of the Conditioned Asphaltic Paving Mixture in paving a surface.

The present invention, in a sixty aspect, refers to a method of producing the Asphaltic Mixture Conditioner, according to the first aspect of the invention, with a system for producing the Asphaltic Mixture Conditioner comprising:
a) A mixing tank to provide a mixture of a polyol, a surfactant, a mineral acid and water;
b) A bitumen tank having a heating device;
c) A mixing zone to provide the mixture of the aqueous solution comprising the polyol, the surfactant, the mineral acid and water with the bitumen, resulting the asphaltic mixture conditioner;
d) At least a heat exchanger to cool the asphaltic mixture conditioner, obtained in step c), to ambient temperature; and
e) At least a storage tank to store the asphaltic mixture conditioner.

### Solution to Problem

Surprisingly, the present invention solves the problems of prior art by removing the coking coal carbon fraction from the asphaltic mixture conditioner, wherein this component is an essential one in the composition disclosed in WO2014128517, as well as highly decreasing its viscosity. The emulsifying properties of the asphaltic mixture conditioner, comprising a bitumen, a polyol, a surfactant and a mineral acid of the present invention are preserved, wherein using said asphaltic mixture conditioner into a process of preparation of a conditioned asphaltic paving mixture provides that the later may be stored during longer periods of time, for example from several weeks until six months, without acquiring hardness characteristics. Furthermore, the asphaltic mixture conditioner tends to improve the stabilities of the conditioned asphaltic paving mixture.

### Advantageous Effects of Invention

The conditioned asphaltic paving mixture of the present invention is highly stable in terms of storage and may be properly stored at ambient temperature, while its functional characteristics are preserved for longer periods of time, for example from several weeks up to six months. Additionally, the higher stability of the conditioned asphaltic paving mixture, like a pavement asphalt folder, is provided by addiction of an asphaltic mixture conditioner to said conditioned asphaltic paving mixture. Therefore, the conditioned asphaltic paving mixture according to the present invention has several advantages over the compositions known in prior art, because it is no longer necessary to settle multiple units of production of asphalt nearby the areas where the surfaces will be paved. Instead, a single unit of production of a conditioned asphaltic paving mixture according to the present invention can cover a greater ground range, reducing the fixed costs associated to construction of several facilities for producing asphalt. Moreover, the operational costs associated to maintenance of said units and the costs associated to transportation of raw materials and final products may be reduced. Furthermore, once the conditioned asphaltic paving mixture of the present invention is more stable to be preserved at ambient temperature, the size of batches may be increased, leading to a reduction of the costs associated to production themselves, making possible to achieve a more favorable larger production scale.

### Brief Description of Drawings

With the purpose of promoting an understanding of the principles in accordance with the embodiments of the present invention, reference will be made to the embodiments illustrated in the figures and to the language used to describe the same. Anyway, it must be understood that there is no intention of limiting the scope of the present invention to the contents of the figures. Any alterations or later changes of the inventive features illustrated herein and any additional application of the principles and embodiments of the invention shown, which would occur normally for one skilled in the art when reading this description, are considered as being within the scope of the claimed invention.
**Fig.1**

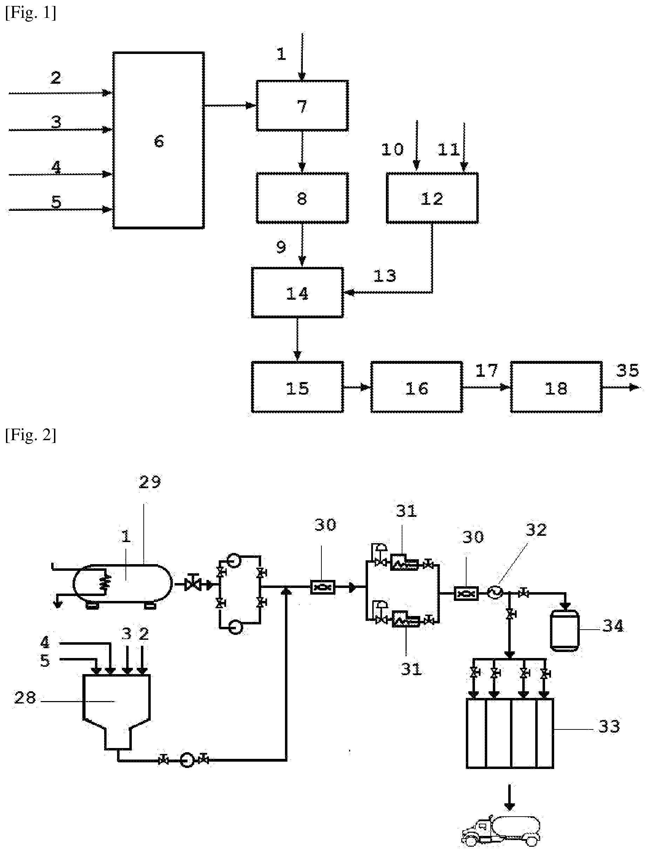

   [fig.1] illustrates one embodiment of the process for obtaining an Asphaltic Mixture Conditioner and a Conditioned Asphaltic Paving Mixture.
**Fig.2**
   [fig.2] illustrates one embodiment of a flow process for obtaining an Asphaltic Mixture Conditioner.
**Fig.3**

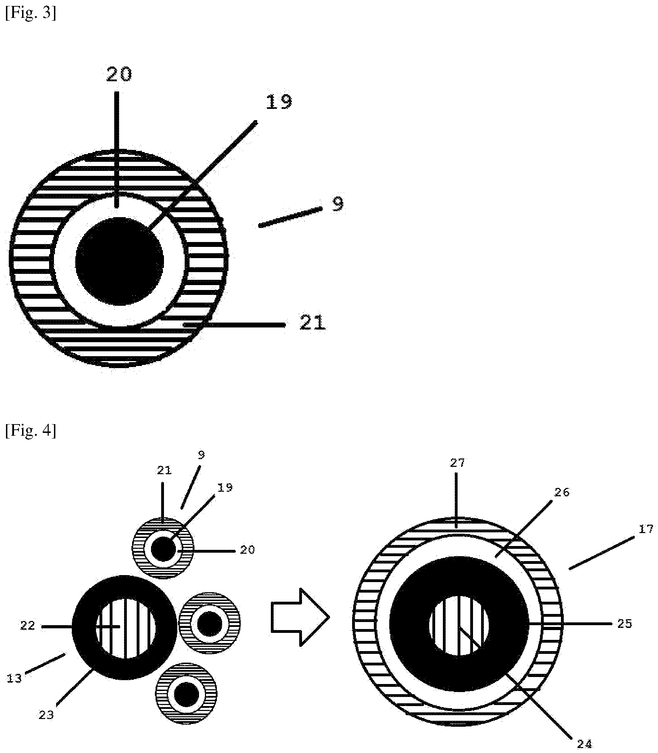

   [fig.3] illustrates a schematic representation of a drop of an Asphaltic Mixture Conditioner.
**Fig.4**
   [fig.4] illustrates a schematic representation of a formation of a particle of a Conditioned Asphaltic Paving Mixture.
**Fig.5**

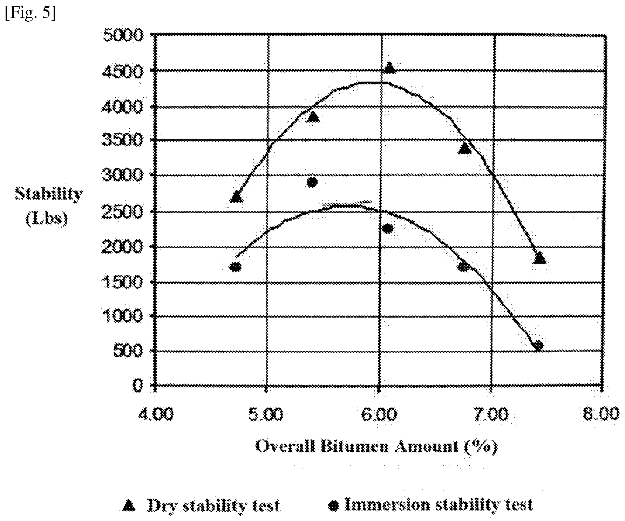

   [fig.5] illustrates a Marshall test for calculating the optimum of the bitumen in the preparation of the Conditioned Asphaltic Paving Mixture.

### Description of Embodiments

The asphaltic mixture conditioner of the present invention may be added to a pre-additivated bituminous composition at ambient temperature, wherein this feature contributes with an easier operation of mixing, because it is not necessary to heat the asphaltic mixture conditioner in order to properly make said conditioner composition flowable. Moreover, the mixing equipment may be an ordinary one, once the viscosity of the asphaltic mixture conditioner is significantly reduced.

In the preferred embodiments according to the present invention, the asphaltic mixture conditioner has a dynamic viscosity in the range from 100 to 300 cP (0.1 Pa.s to 0.3 Pa.s), measured at 25 °C, depending of the amount bitumen used, which is a value significantly smaller than the dynamic viscosity of the composition revealed in WO2014128517, about 200,000 cP (200 Pa.s), measured at 60 °C. Therefore, the asphaltic mixture conditioner of the present invention can be handled at ambient temperature, not requiring be heated to be handled, saving energy and contributing to a simpler operation during the preparation of the conditioned asphaltic paving mixture.

The composition revealed in WO2014128517 consist of glycerine, asphaltic bitumen and coking coal carbon, wherein the later component is responsible for the higher values of dynamic viscosity, which leads to stablishing of a binding heating step of this composition during the mixing with a pre-additivated bituminous composition. Besides that, the coking coal carbon is an environmental contaminant material. The contamination of the coking coal carbon is due to its handling in the form of dust, wherein the contamination is originated from the process of grinding and transport of this material, since the process disclosed in said prior art requires that the coking coal carbon particles are around 200 microns or less.

### Method of Producing the Asphaltic Mixture Conditioner

As illustrated in figure 1, the method for obtaining the asphaltic mixture conditioner (9) is carried out by obtaining of a mixing aqueous phase comprising a surfactant (2), a polyol (3), a mineral acid (4) and water (5) in a first mixing step at a temperature in a range from 70 to 80 °C (6) followed by performing a mixture of the mixing aqueous phase with a first portion of bitumen at a temperature in a range from 100°C to 150 °C (1) in a second mixing step at a temperature in a range from 70 °C to 98 °C (7). After completing the second mixing step, the obtained composition is submitted a cooling step to ambient temperature (8), resulting an asphaltic mixture conditioner (9). Preferably, during the second mixing step, the first portion of bitumen is inputted at a temperature in a range from 110 °C to 150 °C. Preferably, the second mixing step is carried out in a range from 80 °C to 95 °C.

A flow process to prepare an asphaltic mixture conditioner is illustrated in figure 2. A surfactant (2), a polyol (3), a mineral acid (4) and water (5) are mixed in a mixing tank (28) having a dynamic stirrer and a pumping system to discharge the resultant aqueous solution. In parallel, the first portion of bitumen (1) is heated in a bitumen tank having a heating device (29), wherein the heating fluid may be a thermal oil. By means of another pumping system, the first portion of bitumen (1) is mixed with the aqueous solution in a second mixing step, which may comprise a sequence of a first static stirrer (30), a colloidal mill (31) and a second static stirrer (30). Concerning the colloidal mill (31), two or more colloidal mills may be disposed in parallel among themselves. After completing the second mixing step, the obtained composition is submitted a cooling step to ambient temperature by means of at least one heat exchanger (32), resulting an asphaltic mixture conditioner (9), which may be stored in storage tanks (33) and further transported by means of trucks or other suitable vehicles to be used in stages concerning the preparation of a conditioned asphaltic paving mixture (15). The storage tanks (33) may have a pumping and recirculation system, to recirculate the asphaltic mixture conditioner when it is necessary longer storage periods. A waste tank (34) may be provided in order to assist cleaning of the pipeline and system and batch exchanging. The number of equipments and their sizing will be up to production capacity and the optimal storage inventory, as it will be fully understood by a person skilled in the art.

In the preferred embodiments according to the invention, the process of obtaining a mixing aqueous phase comprises the following steps: a) Providing an amount of water at 60 °C, wherein the amount of water considers the desired concentrations by weight of the remaining components of the asphaltic mixture conditioner; b) Adding the polyol into water in the required concentration with the cationic and/or non-ionic surfactants until their proper dissolution; c) Adjusting the pH of the solution in a range from 2.5 to 3.5; d) Setting the temperature of the solution in a range from 70 to 80 °C during the first mixing step.

In the more preferred embodiments according to the invention, during preparation of the oil phase in the second mixing step, the first portion of bitumen is conditioned at a temperature in a range from 110 to 150 °C. Preferably, the process of mixing both phases (aqueous/oil) is carried out by means of at least a colloidal mill.

The first portion of bitumen (1) has a dynamic viscosity equal or greater than 35,000 cP (35 Pa.s), measured at 60 °C, and an API gravity equal or greater than 10 degrees, and is present in the asphaltic mixture conditioner (9) in an amount ranging from 50 to 75%, preferably from 60 to 70%, by total weight of the said asphaltic mixture conditioner. In the preferred embodiments according to the invention, the first portion of bitumen (1) has a dynamic viscosity in the range from 35,000 cP (35 Pa.s) to 500,000 cP (500 Pa.s), measured at 60 °C. In the preferred embodiments according to the invention, the first portion of bitumen (1) has an API gravity in the range from 10 degrees to 30 degrees.

As it is be understood by one skilled in the art, the bitumen may be obtained by the partial distillation of crude petroleum and comprises mainly polycyclic aromatic hydrocarbons and has higher values of viscosity. The first portion of bitumen contributes to incorporation of the asphaltic mixture conditioner into the pre-additivated bituminous composition.

The polyol has from 2 to 8 carbon atoms and is present in an amount from 2 to 6%, preferably from 2 to 4%, by total weight of the said asphaltic mixture conditioner. Examples of the preferred polyols include ethylene glycol, propylene glycol, dipropylene glycol, 1,3-butylene glycol, pentylene glycol, glycerol, diglycerol, pentanediol, Hexanediol, Hexanetriol, 2-Ethyl-1,3-hexanediol, 1,2-Heptanediol, 1,7-Heptanediol, 2,4-Heptanediol, 2,5-Heptanediol, 1,5-Heptanediol, 1,3-Heptanediol, 3,4-Heptanediol, 1,6-Heptanediol, 1,2-Octanediol, 1,3-Octanediol, 1,4-Octanediol, 4,5-Octanediol, 1,8-Octanediol and combinations thereof. It will be fully understood by a person skilled in the art that the stereoisomers of the herein mentioned compounds also are included as examples of polyols that may be present in the asphaltic mixture conditioner according to the present invention.

In the preferred embodiments according to the invention, the polyol has a straight chain and contains from 3 to 6 carbon atoms. In the more preferred embodiments, the polyol is at least one selected from the group consisting of propylene glycol, dipropylene glycol, 1,3-butylene glycol, pentylene glycol, glycerol, diglycerol and combinations thereof. In the more preferred embodiments according to the invention, the polyol is glycerol, which may be used substantially pure or in aqueous solutions, for example solutions comprising at about 70% glycerol by total weight.

Concerning the particles of the conditioned asphaltic paving mixture, as it will detailed below, the polyol has the role of preventing the formation of clusters among said particles.

The surfactant (2) comprises a cationic surfactant, a non-ionic surfactant, or any combinations thereof, in an amount from 0.05 to 0.4%, preferably from 0.1 to 0.3% by total weight of the said asphaltic mixture conditioner.

As the cationic surfactant used in the present invention, any cationic surfactants can be used without limitation as far as they can be used for preparing an asphaltic mixture conditioner according to the present invention.

Examples of the preferred cationic surfactant include an alkylamine salt-type cationic surfactant, an acylamine salt-type cationic surfactant, a quaternary ammonium salt-type cationic surfactant, an amide bond-containing ammonium salt-type cationic surfactant, an ester bond or ether bond-containing ammonium salt-type cationic surfactant, imidazoline or imidazolium salt-type cationic surfactant. These may be used alone or in a combination of two or more.

Other examples of the cationic surfactant may be chosen from, by way of nonlimiting examples, alkylamidopolyamines, alkylimidazolines and alkylimidazo(poly)amines, lignin amines, fatty-chain alkylamido(poly)amines, fatty-chain alkylpolyamines, products from reaction between fatty carboxylic acid(s) or plant oil(s) and polyalkylenepolyamines. The polyalkylenepolyamines may be, by way of nonlimiting examples, dimethylaminopropylamine, N-aminoethylpiperazine, diethylenetriamine, triethylenetetramine, tetraethylenepentamine and pentaethylenehexamine.

Examples of the alkylamine salt-type cationic surfactant and the acylamine salt-type cationic surfactant include primary amine salt having a C₁₂₋₁₈ alkyl group (hydrochloride or acetate), acylaminoethyldiethylamine salt having a C₁₇ alkyl group or alkenyl group (hydrochloride, formate, acetate or lactate), N-alkylpolyalkylenepolyamine salt having a C₁₂₋₁₈ alkyl group (hydrochloride or acetate, the alkylene group has 2 to 3 carbon atoms, repeat of alkyleneamine group is 1 to 3), fatty acid polyethylenepolyamide salt having a C₁₇ alkyl group or alkenyl group (hydrochloride, repeat of ethyleneamine group is 2), and diethylaminoethylamide salt having a C₁₇ alkyl group (hydrochloride, acetate or lactate). These may be used alone or in a combination of two or more.

Examples of the quaternary ammonium salt-type cationic surfactant and the amide bond-containing ammonium salt-type cationic surfactant include alkyl or alkenyl trimethylammonium salt having a C₁₂₋₁₈ alkyl group or a C₁₈ alkenyl group (anion is Cl⁻ , Br⁻ , or CH₃SO₄⁻), dialkyl or dialkenyl dimethylammonium salt having a C₁₂₋₁₈ alkyl group or a C₁₈ alkenyl group (anion is Cl⁻ , Br , or CH₃SO₄⁻), alkyl or alkenyl dimethylbenzylammonium salt having a C₁₂₋₁₈ alkyl group or a C₁₈ alkenyl group (anion is CI-), alkylpyridium salt having a C₁₂₋₁₈ alkyl group (anion is Cl-, Br-), acylaminoethylmethyldiethylammonium salt having a C₁₇ alkyl group or a C₁₇ alkenyl group (anion is CH₃SO₄⁻), acylaminopropyldimethylbenzylammonium salt having a C₁₃ alkyl group (anion is CI-), acylaminopropyldimethylhydroxyethylammonium salt having a C₁₇ alkyl group (anion is ClO₄⁻), acylaminoethylpyridinium salt having a C₁₁ alkyl group (anion is CI-), diacylaminoethyldimethylammonium salt having a C₁₇ alkyl group or a C₁₇ alkenyl group (anion is CI- , one of methyl groups may be a hydroxyethyl group). Additional examples include compounds obtained by cationizing a tertiary amine such as trialkyl or alkenyldialkylamine using a quaternarizing agent such as xylenyl dichloride. These may be used alone or in a combination of two or more.

Examples of the ester bond or ether bond-containing ammonium salt-type cationic surfactant include diacyloxyethylmethylhydroxyethylammonium salt having a C₁₇ alkyl group or a C₁₇ alkenyl group (anion is CH₃SO₄-), and alkyloxymethylpyridinium salt having a C₁₆ alkyl group (anion is CI-). These may be used alone or in a combination of two or more.

Examples of the imidazoline or imidazolium,salt-type cationic surfactant include alkyl or alkenylimidazoline having a C₁₁₋₁₇ alkyl group or a C₁₇ alkenyl group (acetate, carbonate, quaternarized salt), 1-hydroxyethyl-2-alkyl or alkenylimidazoline having a C₁₁₋₁₇ alkyl group or a C₁₇ alkenyl group (including quaternarized salt), and 1-acylaminoethyl-2-alkylimidazolium salt having a C₁₇ alkyl group or alkenyl group (anion is CH₃SO₄⁻, C₂H₅SO₄⁻, alkyl group in the second position is methyl group or ethyl group). These may be used alone or in a combination of two or more.

The aforementioned cationic surfactants may be used alone or in a combination of two or more.

Examples of the nonionic surfactant include at least one kind of styrenated phenol polyalkylene oxide adduct, polyalkylene polyamine polyalkylene oxide adduct, multivalent alcohol fatty acid ester, multivalent alcohol fatty acid ester polyalkylene oxide adduct and benzylated phenol polyalkylene oxide adduct and other usual nonionic surfactants besides them. These may be used alone or in a combination of two or more.

In the preferred embodiments according to the invention, examples of the nonionic surfactants that may be added to the asphaltic mixture conditioner are well known to those skilled in the art and can be chosen from, by way of nonlimiting examples, polyalkoxylated fatty alcohols, polyalkoxylated nonylphenols or other polyalkoxylated compounds, alkylpolyglucosides, ethylene oxide/propylene oxide block copolymers having a molar mass Mw of about 4500 g/mol and an ethylene oxide/(ethylene oxide +propylene oxide) weight ratio of about 40%, such as those sold by the company BASF under the generic name Pluronic TM, and for example Pluronic TM P94, and the like.

In the embodiments of the invention employing cationic and non-ionic surfactants, the proportion of the two kinds of surfactants depend of the properties of each one of the surfactants. In order to achieve a proper combination, initially may be identified the composition of an asphaltic mixture conditioner that work with a pure surfactant. Then, the percentages of the surfactants are varied, and stability properties of the emulsions obtained with each mixture are plotted against the percentages of surfactant mixture used for a certain fixed concentration of asphalt bitumen.

In the preferred embodiments, it would be to look for a better accommodation of the polyol in each micelle, which could mean lesser or greater use of the polyol in the aqueous phase, because the polyol is accommodated differently in each surfactant. A certain percentage of polyol may result in stable asphalt mixture conditioner, considering adding a pure cationic surfactant, but the very same amount of polyol may result a more stable composition, when using a mixture of different surfactants. Therefore, in the more preferred embodiments, an asphalt mixture conditioner may be a little less stable but shall contain the necessary amount of polyol that cause the conditioned asphaltic paving mixture to not harden.

In the preferred embodiments according to the invention, concerning the amount of surfactant present in the asphaltic mixture conditioner, the cationic surfactants are present from 92 to 96% by total weight of surfactant and the non-ionic surfactants correspond from 4 to 8% by total weight of surfactant.

The surfactant has the role of influencing the superficial forces in the particles of the conditioned asphaltic paving mixture, contributing to a proximity among the particles.

When the surfactant is a cationic one, the drops of asphaltic mixture conditioner do not attract themselves, due to the repulsion forces among them, caused by the very same electric charge on the surfactant's layer surface. In the other hand, when the surfactant is a non-ionic one, the drops of asphaltic mixture conditioner do not attract themselves, due to the steric forces. Therefore, this set of repulsive forces favors a higher stability of the asphaltic mixture conditioner.

The mineral acid is present in an amount to adjust the pH of the aqueous phase in the asphaltic mixture conditioner in the range from about 2 to about 4, preferably from 2.5 to 3.5.

Examples of the mineral acid include at least one of the group comprising hydrochloric acid, sulfuric acid, nitric acid and phosphoric acid. These may be used alone or in a combination of two or more. In the preferred embodiments according to the invention, the mineral acid employed is hydrochloric acid.

As it will be fully understood by a person skilled in the art, the water is in an amount to complete the emulsion, as this component is the continuous phase of the emulsion.

### Method of Producing the Conditioned Asphaltic Paving Mixture

As illustrated in figure 1, the method for obtaining the conditioned asphaltic paving mixture (17) comprise a step of obtaining a pre-additivated bituminous composition (12), by mixing aggregate (10) with a second portion of bitumen (11), wherein this step is carried out by known methods of the prior art, resulting in a pre-additivated bituminous composition (13), wherein the mixture preferably occurs at a temperature in a range from 130°C to 170 °C. Preferably, the aggregate (10) and the second portion of bitumen (11) may be, separately, preheated to a temperature in a range from 130°C to 170 °C.

As illustrated in figure 1, the heated pre-additivated bituminous composition (13) is submitted to a step of obtaining a conditioned asphaltic paving mixture at a temperature in a range from 130°C to 170 °C (14) by providing a mixture of the asphaltic mixture conditioner (9), which is maintained at ambient temperature in the preferred embodiments, with the heated pre-additivated bituminous composition (13), wherein the final mixture is maintained in a temperature range from 130°C to 170°C, resulting in a conditioned asphaltic paving mixture. Preferably, the asphaltic mixture conditioner (9) is added to the pre-additivated bituminous composition (13) in a mixing drum when the temperature is in a range from 130 to 170 °C, resulting in the conditioned asphaltic paving mixture. More preferably, this step is performed a few seconds after the second bitumen portion has entered the mixing drum and it has property coated the aggregates.

The second portion of bitumen has a dynamic viscosity equal or greater than 35,000 cP (35 Pa.s), measured at 60°C, and an API gravity equal or greater than 10 degrees. One function of the bitumen in a conditioned asphaltic paving mixture is acting as a binder, that holds asphalt together. The second portion of bitumen is in an amount from 2 to 8% by total weight of the said conditioned asphaltic paving mixture. In the preferred embodiment according to the invention, the second portion of bitumen is in an amount from 3.5 to 6.5% by total weight of the said conditioned asphaltic paving mixture. In the preferred embodiments according to the invention, the second portion of bitumen (1) has a dynamic viscosity in the range from 35,000 cP (35 Pa.s) to 500,000 cP (500 Pa.s), measured at 60 °C. In the preferred embodiments according to the invention, the second portion of bitumen (1) has an API gravity in the range from 10 degrees to 30 degrees.

In the more preferred embodiments according to the invention, the sum of the first bitumen portion, comprised in the asphaltic mixture conditioner, and the second bitumen portion, comprised in the pre-additivated bituminous composition, must coincide with the amount of bitumen required as an optimal amount for an asphalt mix designed for a specific job.

In the more preferred embodiments according to the invention, the two bitumen portions should have the same specification and having similar hardness properties. In some applications, different kinds of bitumen may be used, wherein the difference between the hardness of each one is not significant.

The aggregates used for preparing the conditioned asphaltic paving mixture may be crushed rock, sand, gravel or slags, and combinations thereof.

In a preferred embodiment according to the present invention, the aggregate comprises a member selected from the group consisting of dense-graded aggregate, gap-graded aggregate, open-graded, stone-matrix aggregate, reclaimed asphalt paving material, and combinations thereof.

The aggregates contribute to proving stability to the paving composition after being applied over a surface to be paved. The aggregate is in an amount from 87 to 97% by total weight of the said conditioned asphaltic paving mixture. In the preferred embodiment according to the invention, the aggregate is in an amount from 93 to 96% by total weight of the said conditioned asphaltic paving mixture.

The asphaltic mixture conditioner is in an amount from 1 to 5% by total weight of the said conditioned asphaltic paving mixture. In the preferred embodiment according to the invention, the asphaltic mixture conditioner is in an amount from 1.5 to 3.5% by total weight of the said conditioned asphaltic paving mixture.

The conditioned asphaltic paving mixture (17) may be directly used onto a surface to be paved, while its temperature is still in the application range, for example from 130°C to 170°C.

Surprisingly, after being cooled down by a step of performing a controlled cooling of the Conditioned Asphaltic Paving Mixture until ambient temperature (15), the Conditioned Asphaltic Paving Mixture (17) may be submitted to a step of storing a conditioned asphaltic paving mixture at ambient temperature (16) until being applied onto a surface to be paved, wherein the storage may last, for example from several weeks to several months, without a reduction of the stability of the conditioned asphaltic paving mixture whereas the said conditioned asphaltic paving mixture is stored, for example, at ambient temperature. Experimentally, excellent results have been obtained for up to 6 months of indoor storage.

In the preferred embodiments according to the invention, in the step of performing a controlled cooling of the conditioned asphaltic paving mixture until ambient temperature (15), the controlled cooling of the Conditioned Asphaltic Paving Mixture comprises cooling the conditioned asphaltic paving mixture at a cooling rate directly proportional to the conditioned asphaltic paving mixture producing rate. In the more preferred embodiments, the cooling rate of the conditioned asphaltic paving mixture is substantially the same of the conditioned asphaltic paving mixture producing rate.

After a certain storage period and before being applied onto a surface to be paved, the conditioned asphaltic paving mixture (17) is heated to a temperature range from 130°C to 170°C, wherein, surprisingly, the conditioned asphaltic paving mixture maintains all the necessary features to properly be applied onto the surface to be paved.

Without willing to be bonded by any theory whatsoever, a schematic diagram of a asphaltic mixture conditioner (9) is shown in figure 3, wherein a core comprising a drop of a first portion of bitumen in an asphaltic mixture conditioner (19) is surrounded by an inner layer of surfactant and polyol in acid aqueous medium in a particle of asphaltic mixture conditioner (20). This inner layer promotes a comicelization, that is, forming mixed micelles, wherein the polyol has functions as a co-surfactant, in addition to its function of not allowing the conditioned asphalt mixture to harden. In this diagram, the surfactant molecules' bitumen-soluble tails project into the bitumen core, while the water-soluble ends remain in contact with the aqueous medium. Moreover, the inner layer of surfactant and polyol in acid aqueous medium is surrounded by an outer layer of polyol in an acid aqueous medium in a particle of asphaltic mixture conditioner (21).

Without willing to be bonded by any theory whatsoever, Applicant present a schematic diagram related to the formation of a conditioned asphaltic paving mixture (17) in figure 4. When a hot pre-additivated bituminous composition (13), comprising a core of aggregate (22), which is surrounded by a layer of a second portion of bitumen that covers an aggregate from the hot pre-additivated bituminous composition (23), is mixed with the asphaltic mixture conditioner (9) in a temperature range from 130°C to 170°C, substantially all the water comprised in the layer of surfactant and polyol in acid aqueous medium in a particle of asphaltic mixture conditioner (20) evaporates. The evaporation of the water leads to an abrupt break of the asphaltic mixture conditioner (9) over the layer of a second portion of bitumen that covers an aggregate from the hot pre-additivated bituminous composition (23), resulting in a particle of a conditioned asphaltic paving mixture (17).

During the collapse of the asphaltic mixture conditioner, the polyol is not evaporated, due its higher boiling point, and the material comprising the first portion of bitumen, the surfactant and the polyol is spread over the outer surface of a layer of a second portion of bitumen that covers an aggregate from the hot pre-additivated bituminous composition (23), resulting in a thicker final layer of bitumen covering an aggregate in a conditioned asphaltic paving mixture (25), which covers the core of aggregate in a conditioned asphaltic paving mixture (24). The thicker final layer of bitumen covering an aggregate in a conditioned asphaltic paving mixture (25) is comprised by the materials coming from the first portion of bitumen (1) and the second portion of bitumen (11).

The small size of the asphalt globules inside the Asphaltic Mixture Conditioner (9), wherein the average size of the asphalt globules is of the order from 8 to 12 microns, somewhat larger or smaller depending on the formulation and shear conditions in the colloidal mill. Moreover, the viscosity of the Asphaltic Mixture Conditioner, which is in a range from 100 to 300 cP (0.1 Pa.s to 0.3 Pa.s), measured at 25 °C, makes the first portion of bitumen provide a greater coverage area, when the Asphaltic Mixture Conditioner is added to the pre-additivated bituminous composition (13), resulting in a far superior coverage, when compared to coverage provided by bitumen in a conventional hot asphalt mix, since the bitumen employed in the asphaltic mixture conditioner, according to the present invention, has a much higher viscosity, equal to or greater than 35,000 cP (35 Pa. s), measured at 60 °C. Therefore, the Asphaltic Mixture Conditioner produces a decreasing in the amount of empty spaces in the bulk of the Conditioned Asphaltic Paving Mixture, and consequently, provides a better stability to it.

Moreover, a schematic representation of a particle of a conditioned asphaltic paving mixture (17) presents an intermediate final layer of surfactant and polyol in a conditioned asphaltic paving mixture (26) and an outer final layer of polyol in a conditioned asphaltic paving mixture (27), wherein the outer layer of polyol prevents the particles of the conditioned asphaltic paving mixture forming clusters or agglomerates, once the polyol is insoluble in the bitumen fraction.

In the preferred embodiments according to the invention, the overall amount of bitumen, comprising the sum of the first portion of bitumen (1) and the second portion of bitumen (11), is a relevant parameter in order to meet proper longer storage periods and proper adhesion among the particles of the conditioned asphaltic paving mixture. When the overall amount of bitumen exceeds the optimal ranges, an irreversible hardening of the conditioned asphaltic paving mixture may occur during the storage period. In the preferred embodiments, the overall amount of bitumen is in an amount from 3% to 8% by total weight of the said conditioned asphaltic paving mixture. In the more preferred embodiments, the overall amount of bitumen is in an amount from 3.5% to 6.5% by total weight of the said conditioned asphaltic paving mixture.

### Examples

In order to specify the desired values of the overall amount of bitumen in the conditioned asphaltic paving mixture, it was used the Marshall method (Manual Series N.02 (MS-2) Asphalt Mix Designed Methods. Seventh Edition 2014 Asphalt Institute). This method is proper to identify important properties of bituminous compositions and to evaluate and predict failures due to traction forces. The amounts of bitumen and the size of particles of aggregate may be selected, for example, according to the number and size of vehicles desired, for example light, medium or heavy vehicles. The samples of bitumen coated aggregates may comprise from 3% to 8% of bitumen, namely 4.5%, 5.0%, 5.5% and 6.0% of bitumen.

As illustrated in figure 5, the Marshall method is carried out by evaluating the stability of the bitumen coated aggregates after performing a stability test in dry conditions and another test in wet conditions, wherein the later corresponds to assessing if the amount of bitumen is able to provide a desired stability when the bitumen coated aggregates are immersed in water for a certain period of time. The Marshall method sets up the maximum acceptable values of losing stability for certain conditions of use of the paved surface, for instance a paved road, as illustrated in table 1. The Marshall method employs briquettes having 10 cm of diameter and 6.25 cm of height or 15 cm of diameter and 9.375 cm of height. Considering that the optimal amount of the bitumen in the conditioned asphaltic paving mixture is, for example, 5.7% by total weight of said composition, it is possible to employ 4.7% of the necessary bitumen in the step of obtaining a pre-additivated bituminous composition (13) and the remaining amount be reserved to be used in the step of obtaining an asphaltic mixture conditioner (9). As it will be fully understood by a person skilled in the art, a plurality of combinations may be employed in order to achieve a proper and optimal mass balance in view of the amounts related to the first portion of bitumen (1) and the second portion of bitumen (11), resulting in the optimal overall amount of bitumen.

**[Table 1]**

| Marshall method Criteria | Light traffic Surface & Base | | Medium traffic Surface & Base | | Heavy traffic Surface & Base | |
|---|---|---|---|---|---|---|
| | Min | Max | Min | Max | Min | Max |
| Compaction, number of blows each end of specimen | 35 | | 50 | | 75 | |
| Stability (N) | 3336 | - | 5338 | - | 8006 | - |
| Flow, 0.25 mm (refers to the point where the load begins to decrease. The flow criteria were stablished for neat asphalts) | 8 | 18 | 8 | 16 | 8 | 14 |
| Percent air voids (should be targeted at 4%. This may be slightly adjusted if needed to meet other Marshall criteria | 3 | 5 | 3 | 5 | 3 | 5 |

Moreover, the stability characteristics of the conditioned asphaltic paving mixture after adding the asphaltic mixture conditioner are improved, as it is shown in table 2, which presents the stability results for two samples of conditioned asphaltic paving mixtures, according to the present invention, submitted to a Marshall method criteria of heavy traffic.

**[Table 2]**

| Sample | Mass (g) | | Volume (cm3) | Density | Stability (N) | Flow |
|---|---|---|---|---|---|---|
| | Air | Water | | | | |
| 1 | 1160.38 | 669.80 | 490.58 | 2.365 | 11,450 | 6 |
| 2 | 1199.40 | 694.40 | 505.00 | 2.375 | 12,722 | 12 |

Another advantage of the conditioned asphaltic paving mixture according to the present invention in view of the prior art is related to a better granular and thermal standardization of different batches, when they are heated near the application site

The present invention, in another aspect, refers to a paved surface comprising at least a layer of the conditioned asphaltic paving mixture. The surface to be paved comprises roads, parking areas, railway tracks, ports, airport runways, bicycle lanes, sidewalks and play- and sport areas.

As used herein, the term "ambient temperatures" means an environmental temperature of less than about 40°C, namely from 10°C to 45°C.

As used in this description, the expressions "about" and "approximately" refer to a range in values of roughly 10% the specified number.

As used in this description, the expression. "substantially" means that the real value is within an interval of about 10% of the desired value, variable or related limit, particularly within about 5% of the desired value, variable or related limit or particularly within about 1% of the desired value, variable or related limit.

The subject matter described above is provided as an illustration of the present invention and must not be interpreted to limit it. The terminology used with the purpose of describing specific embodiments, according to the present invention, must not be interpreted to limit the invention. As used in this description, the definite and indefinite articles, in their singular form, aim to include in the interpretation the plural forms, unless the context of the description explicitly indicates the contrary. It will be understood that the expressions "comprise" and "include", when used in this description, specify the presence of the characteristics, the elements, the components, the steps and the related operations, but do not exclude the possibility of other characteristics, elements, components, steps and operations from being also contemplated.

All modifications, providing that they do not modify the essential features of the following claims, must be considered within the scope of protection of the present invention.

### Industrial Applicability

The present invention refers to an Asphaltic Mixture Conditioner, employed as an additive into a Conditioned Asphaltic Paving Mixture, which is used to pave surfaces.

### Reference Signs List

1. a first portion of bitumen at a temperature in a range from 100 °C to 150 °C
2. a surfactant
3. a polyol
4. a mineral acid
5. water
6. a first mixing step at a temperature in a range from 70 °C to 80 °C
7. a second mixing step at a temperature in a range from 70 °C to 98 °C
8. a cooling step to ambient temperature
9. an Asphaltic Mixture Conditioner
10. aggregate at a temperature in a range from 130°C to 170 °C
11. a second portion of bitumen at a temperature in a range from 130°C to 170 °C
12. a step of obtaining a pre-additivated bituminous composition
13. a pre-additivated bituminous composition
14. a step of obtaining a Conditioned Asphaltic Paving Mixture at a temperature in a range from 130 °C to 170 °C
15. a step of performing a controlled cooling of the Conditioned Asphaltic Paving Mixture until ambient temperature
16. a step of storing a Conditioned Asphaltic Paving Mixture at ambient temperature
17. a Conditioned Asphaltic Paving Mixture
18. a step of applying a Conditioned Asphaltic Paving Mixture onto a surface to be paved
19. a drop of a first portion of bitumen in an Asphaltic Mixture Conditioner
20. a layer of surfactant and polyol in acid aqueous medium in a particle of Asphaltic Mixture Conditioner
21. a layer of polyol in an acid aqueous medium in a particle of Asphaltic Mixture Conditioner
22. aggregate in a pre-additivated bituminous composition
23. a layer of a second portion of bitumen that covers an aggregate from the hot pre-additivated bituminous composition
24. aggregate in a Conditioned Asphaltic Paving Mixture
25. a thicker final layer of bitumen covering an aggregate in a Conditioned Asphaltic Paving Mixture
26. a final layer of surfactant and polyol in a Conditioned Asphaltic Paving Mixture
27. a final layer of polyol in a Conditioned Asphaltic Paving Mixture
28. a mixing tank
29. a bitumen tank having a heating device
30. a static stirrer
31. a colloidal mill
32. a heat exchanger
33. a storage tank
34. a waste tank
35. a paved surface

### Citation List

Citation List follows:

### Patent Literature

PTL1: international patent application WO2014128517A1

## Claims

1. An Asphaltic Mixture Conditioner **characterized by** comprising:
a) a bitumen having a dynamic viscosity equal or greater than 35,000 cP (35 Pa.s), measured at 60 °C, and an API gravity equal or greater than 10 degrees, wherein the bitumen is in an amount from 50 to 75% by total weight of the said asphaltic mixture conditioner;
b) a polyol having from 2 to 8 carbon atoms, in an amount from 2 to 6% by total weight of the said asphaltic mixture conditioner;
c) a surfactant, wherein the surfactant comprises a cationic surfactant, a non-ionic surfactant, or any combinations thereof, in an amount from 0.05 to 0.4% by total weight of the said asphaltic mixture conditioner;
d) a mineral acid, in an amount to adjust the pH of the aqueous phase in the asphaltic mixture conditioner in the range from about 2 to about 4;
e) water in an amount to complete the asphaltic mixture conditioner.

2. The Asphaltic Mixture Conditioner according to claim 1, **characterized by** the fact that the bitumen is in an amount from 60 to 70% by total weight of the said asphaltic mixture conditioner.

3. The Asphaltic Mixture Conditioner according to any one of claims 1 and 2, **characterized by** the fact that the polyol is in an amount from 2 to 4% by total weight of the said asphaltic mixture conditioner.

4. The Asphaltic Mixture Conditioner according to any one of claims 1 to 3, **characterized by** the fact that the polyol has a straight chain and from 3 to 6 carbon atoms.

5. The Asphaltic Mixture Conditioner according to any one of claims 1 to 3, **characterized by** the fact that the polyol is at least one selected from the group consisting of propylene glycol, dipropylene glycol, 1,3-butylene glycol, pentylene glycol, glycerol, diglycerol and combinations thereof.

6. The Asphaltic Mixture Conditioner according to any one of claims 1 to 5, **characterized by** the fact that the surfactant is in an amount from 0.1 to 0.3% by total weight of the said asphaltic mixture conditioner.

7. The Asphaltic Mixture Conditioner according to any one of claims 1 to 6, **characterized by** the fact that the mineral acid is at least one selected from the group consisting of hydrochloric acid, nitric acid, sulfuric acid and combinations thereof.

8. A Conditioned Asphaltic Paving Mixture **characterized by** comprising:
a) an asphaltic mixture conditioner, of any one of claims 1 to 7, in an amount from 1 to 5% by total weight of the said conditioned asphaltic paving mixture, wherein the bitumen comprised in the said asphaltic mixture conditioner is a first portion of bitumen;
b) a second portion of bitumen having a dynamic viscosity equal or greater than 35,000 cP (35 Pa.s), measured at 60 °C, and an API gravity equal or greater than 10 degrees, wherein the second portion of bitumen is in an amount from 2 to 8% by total weight of the said conditioned asphaltic paving mixture;
c) aggregate, in an amount from 87 to 97% by total weight of the said conditioned asphaltic paving mixture.

9. The Conditioned Asphaltic Paving Mixture according to claim 8, **characterized by** the fact that the asphaltic mixture conditioner is in an amount from 1.5 to 3.5% by total weight of the said conditioned asphaltic paving mixture.

10. The Conditioned Asphaltic Paving Mixture according to any one of claims 8 and 9, **characterized by** the fact that the second portion of bitumen is in an amount from 3.5 to 6.5% by total weight of the said conditioned asphaltic paving mixture.

11. The Conditioned Asphaltic Paving Mixture according to any one of claims 8 to 10, **characterized by** the fact that the aggregate is in an amount from 93 to 96% by total weight of the said conditioned asphaltic paving mixture.

12. The Conditioned Asphaltic Paving Mixture according to any one of claims 8 to 11, **characterized by** the fact that the aggregate comprises a member selected from the group consisting of dense-graded aggregate, gap-graded aggregate, open-graded, stone-matrix aggregate, reclaimed asphalt paving material, and combinations thereof.

13. A paved surface **characterized by** comprising a layer of the Conditioned Asphaltic Paving Mixture of any one of the claims 8 to 12.

14. A method of producing the Conditioned Asphaltic Paving Mixture of any one of the claims 8 to 12, **characterized by** comprising the steps:
a. Providing a mixture of a polyol, a surfactant, a mineral acid and water, wherein the mixture occurs at a temperature in a range from 70 to 80 °C;
b. Providing a mixture of the composition, obtained in step a), with a first portion of bitumen, having a dynamic viscosity equal or greater than 35,000 cP (35 Pa.s), measured at 60 °C, and an API gravity equal or greater than 10 degrees, wherein the first portion of bitumen is at a temperature in a range from 100 to 150 °C, obtaining the asphaltic mixture conditioner of any one of the claims 1 to 7;
c. Reducing the temperature of the asphaltic mixture conditioner, obtained in step b), to the ambient temperature;
d. Providing a mixture of a second portion of bitumen having a dynamic viscosity equal or greater than 35,000 cP (35 Pa.s), measured at 60 °C, and an API gravity equal or greater than 10 degrees with aggregate, wherein the mixture occurs at a temperature from 130°C to 170 °C;
e. Providing a mixture of the asphaltic mixing, obtained in the step c), which is maintained at ambient temperature, with the mixture of step d), wherein the final mixture is maintained in a temperature range from 130°C to 170°C, resulting in the conditioned asphaltic paving mixture;
f. Performing a controlled cooling of the conditioned asphaltic paving mixture, obtained in step e), until ambient temperature;
g. Storing the conditioned asphaltic paving mixture, obtained in step f) at ambient temperature until being applied onto a surface to be paved.

15. The method of producing the Conditioned Asphaltic Paving Mixture according to claim 14, **characterized by** the fact that the conditioned asphaltic paving mixture is heated to a compaction temperature range from 130 °C to 170 °C, before being applied onto a surface to be paved, when the conditioned asphaltic paving mixture is previously stored at ambient temperature.

16. The method of producing the Conditioned Asphaltic Paving Mixture according to anyone of claims 14 or 15, **characterized by** the fact that the controlled cooling of the conditioned asphaltic paving mixture of step f) comprises cooling the conditioned asphaltic paving mixture at a cooling rate directly proportional to the conditioned asphaltic paving mixture producing rate.

17. A use of the Conditioned Asphaltic Paving Mixture of any one of the claims 8 to 12, **characterized by** is in paving a surface.

18. A method of producing the Asphaltic Mixture Conditioner of any one of claims 1 to 7 with a system **characterized by** comprising:
a. A mixing tank (28) to provide a mixture of a polyol, a surfactant, a mineral acid and water;
b. A bitumen tank having a heating device (29);
c. A mixing zone to provide the mixture of the aqueous solution comprising the polyol, the surfactant, the mineral acid and water with the bitumen, resulting the asphaltic mixture conditioner (9);
d. At least a heat exchanger (32) to cool the asphaltic mixture conditioner (9), obtained in step c), to ambient temperature;
e. At least a storage tank (33) to store the asphaltic mixture conditioner (9).

19. The method of producing the Asphaltic Mixture Conditioner according to claim 18, **characterized by** the fact that the mixing zone of step c) comprises a sequence of a first static stirrer (30), at least a colloidal mill (31), and a second static stirrer (30).

20. The method of producing the Asphaltic Mixture Conditioner according to claim 19, **characterized by** the fact that the at least a colloidal mill (31) comprises two or more colloidal mills (31) disposed in parallel among themselves.

## Patentansprüche

1. Ein Asphalt Mischkonditionierer, **dadurch gekennzeichnet, dass** er Folgendes beinhaltet:
a) Ein Bitumen mit einer dynamischen Viskosität gleich oder größer als 35.000 cP (35 Pa.s), gemessen bei 60 °C, und einem API-Grad gleich oder größer als 10 Grad, worin das Bitumen einen Anteil von 50 bis 75 % bezogen auf das Gesamtgewicht des genannten Asphalt Mischkonditionierers aufweist;
b) ein Polyol mit 2 bis 8 Kohlenstoffatomen, in einem Anteil von 2 bis 6 % bezogen auf das Gesamtgewicht des genannten Asphalt Mischkonditionierers;
c) ein Tensid, worin das Tensid aus einem kationischen Tensid, einem nichtionischen Tensid oder einer Kombination davon in einem Anteil von 0,05 bis 0,4 % bezogen auf das Gesamtgewicht des genannten Asphalt Mischkonditionierers besteht;
d) eine Mineralsäure in einer Menge, um den pH-Wert der wässrigen Phase im Asphalt Mischkonditionierer im Bereich von etwa 2 bis etwa 4 einzustellen;
e) Wasser in einer Menge, um den Asphalt Mischkonditionierer zu vervollständigen.

2. Der Asphalt Mischkonditionierer gemäß Anspruch 1, **dadurch gekennzeichnet, dass** das Bitumen einen Anteil von 60 bis 70 % bezogen auf das Gesamtgewicht des genannten Asphalt Mischkonditionierers aufweist.

3. Der Asphalt Mischkonditionierer gemäß einem der Ansprüche 1 und 2, **dadurch gekennzeichnet, dass** das Polyol in einem Anteil von 2 bis 4 % bezogen auf das Gesamtgewicht des genannten Asphalt Mischkonditionierers enthalten ist.

4. Der Asphalt Mischkonditionierer gemäß einem der Ansprüche 1 bis 3, **dadurch gekennzeichnet, dass** das Polyol eine gerade Kette und von 3 bis 6 Kohlenstoffatomen aufweist.

5. Der Asphalt Mischkonditionierer gemäß einem der Ansprüche 1 bis 3, **dadurch gekennzeichnet, dass** das Polyol mindestens ein ausgewähltes Polyol aus der Gruppe ist, die aus Propylenglykol, Dipropylenglykol, 1,3-Butylenglykol, Pentylenglykol, Glycerin, Diglycerin und Kombinationen davon besteht.

6. Der Asphalt Mischkonditionierer gemäß einem der Ansprüche 1 bis 5, **dadurch gekennzeichnet, dass** das Tensid in einem Anteil von 0,1 bis 0,3 % bezogen auf das Gesamtgewicht des genannten Asphalt Mischkonditionierers enthalten ist.

7. Der Asphalt Mischkonditionierer gemäß einem der Ansprüche 1 bis 6, **dadurch gekennzeichnet, dass** die Mineralsäure mindestens eine Säure ist, die aus der Gruppe bestehend aus Salzsäure, Salpetersäure, Schwefelsäure und Kombinationen davon ausgewählt wird.

8. Ein konditioniertes Asphaltiergemisch, **dadurch gekennzeichnet, dass** es Folgendes beinhaltet:
a) Einen Asphalt Mischkonditionierer gemäß einem der Ansprüche 1 bis 7, in einem Anteil von 1 bis 5 % bezogen auf das Gesamtgewicht des genannten konditionierten Asphaltiergemisches, worin das in dem besagten Asphalt Mischkonditionierer enthaltene Bitumen eine erste Bitumen-Portion ist;
b) eine zweite Bitumen-Portion mit einer dynamischen Viskosität gleich oder größer als 35.000 cP (35 Pa.s), gemessen bei 60 °C, und einem API-Grad gleich oder größer als10 Grad, worin die zweite Bitumen-Portion in einem Anteil von 2 bis 8 % bezogen auf das Gesamtgewicht des genannten konditionierten Asphaltiergemisches enthalten ist;
c) Zuschlagstoff in einem Anteil von 87 bis 97 % bezogen auf das Gesamtgewicht des genannten konditionierten Asphaltiergemisches.

9. Das konditionierte Asphaltiergemisch gemäß Anspruch 8, **dadurch gekennzeichnet, dass** der Asphalt Mischkonditionierer in einem Anteil von 1,5 bis 3,5 % bezogen auf das Gesamtgewicht des genannten konditionierten Asphaltiergemisches enthalten ist.

10. Das konditionierte Asphaltiergemisch gemäß einem der Ansprüche 8 und 9, **dadurch gekennzeichnet, dass** die zweite Bitumen-Portion in einem Anteil von 3,5 bis 6,5 % bezogen auf das Gesamtgewicht des genannten konditionierten Asphaltiergemisches vorhanden ist.

11. Das konditionierte Asphaltiergemisch gemäß einem der Ansprüche 8 bis 10, **dadurch gekennzeichnet, dass** der Zuschlagstoff in einem Anteil von 93 bis 96 % bezogen auf das Gesamtgewicht des genannten konditionierten Asphaltiergemisches vorhanden ist.

12. Das konditionierte Asphaltiergemisch gemäß einem der Ansprüche 8 bis 11, **dadurch gekennzeichnet, dass** der Zuschlagstoff aus einer Gruppe ausgewählt wird, die aus hohlraumarmem Zuschlagstoff, lückenhaftem Zuschlagstoff, offenporigem Steinmatrix-Zuschlagstoff, aufbereitetem Asphalt-Pflastermaterial und Kombinationen daraus besteht.

13. Eine Pflasterfläche, **dadurch gekennzeichnet, dass** sie eine Schicht des konditionierten Asphaltiergemisches gemäß einem der Ansprüche 8 bis 12 aufweist.

14. Ein Verfahren zur Herstellung des konditionierten Asphaltiergemisches gemäß einem der Ansprüche 8 bis 12, **dadurch gekennzeichnet, dass** es folgende Schritte umfasst:
a. Herstellung einer Mischung aus einem Polyol, einem Tensid, einer Mineralsäure und Wasser, worin die Mischung bei einem Temperaturbereich von 70 °C bis 80 °C erfolgt;
b. Bereitstellung einer Mischung der in Schritt a) erhaltenen Zusammensetzung mit einer ersten Bitumen-Portion, die eine dynamische Viskosität von 35.000 cP (35 Pa.s) oder mehr, gemessen bei 60 °C, und einen API-Grad gleich oder größer als 10 Grad aufweist, worin die erste Bitumen-Portion eine Temperatur im Bereich von 100 bis 150 °C aufweist, wodurch der Asphalt Mischkonditionierer aus einem der Ansprüche 1 bis 7 erhalten wird;
c. Reduzierung der Temperatur des in Schritt b) erhaltenen Asphalt Mischkonditionierers auf die Umgebungstemperatur;
d. Bereitstellung einer Mischung aus einer zweiten Bitumen-Portion mit einer dynamischen Viskosität gleich oder größer als 35.000 cP (35 Pa.s), gemessen bei 60 °C, und einem API-Grad gleich oder größer als 10 Grad mit Zuschlagstoff, worin die Mischung bei einer Temperatur von 130 °C bis 170 °C stattfindet;
e. Herstellung einer Mischung aus dem in Schritt c) erhaltenen Asphaltmischgut, die bei Umgebungstemperatur gehalten wird, mit der Mischung aus Schritt d), worin die Endmischung bei einem Temperaturbereich von 130 °C bis 170 °C gehalten wird, wodurch das konditionierte Asphaltiergemisch entsteht;
f. Durchführung einer kontrollierten Kühlung des in Schritt e) erhaltenen konditionierten Asphaltiergemisches bis zur Umgebungstemperatur;
g. Lagerung des in Schritt f) erhaltenen konditionierten Asphaltiergemisches bei Umgebungstemperatur, bis es auf eine Pflasterfläche aufgetragen wird.

15. Das Verfahren zur Herstellung des konditionierten Asphaltiergemisches gemäß Anspruch 14, **dadurch gekennzeichnet, dass** das konditionierte Asphaltiergemisch auf einen Verdichtungs-Temperaturbereich von 130 °C bis 170 °C erhitzt wird, bevor es auf eine Pflasterfläche aufgetragen wird, falls das konditionierte Asphaltiergemisch zuvor bei Umgebungstemperatur gelagert wurde.

16. Das Verfahren zur Herstellung des konditionierten Asphaltiergemisches gemäß einem der Ansprüche 14 oder 15, **dadurch gekennzeichnet, dass** die kontrollierte Kühlung des konditionierten Asphaltiergemisches von Schritt f) die Kühlung des konditionierten Asphaltiergemisches bei einer Abkühlrate umfasst, die direkt proportional zur Produktionsrate des konditionierten Asphaltiergemisches ist.

17. Eine Verwendung des konditionierten Asphaltiergemisches aus einem der Ansprüche 8 bis 12, **dadurch gekennzeichnet, dass** sie beim Pflastern einer Oberfläche verwendet wird.

18. Ein Verfahren zur Herstellung des Asphalt Mischkonditionierers aus einem der Ansprüche 1 bis 7 mittels eines Systems, das Folgendes umfasst:
a. Einen Mischbehälter (28) zur Herstellung einer Mischung aus einem Polyol, einem Tensid, einer Mineralsäure und Wasser;
b. Einen Bitumentank mit einer Heizvorrichtung (29),
c. Einen Mischbereich, der die Mischung der wässrigen Lösung aus Polyol, Tensid, Mineralsäure und Wasser mit dem Bitumen bereitstellt, um den Asphalt Mischkonditionierer (9) herzustellen;
d. Mindestens einen Wärmetauscher (32), um den in Schritt c) erhaltenen Asphalt Mischkonditionierer (9) auf Umgebungstemperatur abzukühlen;
e. Mindestens einen Vorratstank (33) zur Lagerung des Asphalt Mischkonditionierers (9).

19. Das Verfahren zur Herstellung des Asphalt Mischkonditionierers gemäß Anspruch 18, **dadurch gekennzeichnet, dass** der Mischbereich des Schritts c) eine Sequenz eines ersten statischen Rührers (30), mindestens einer Kolloidmühle (31) und eines zweiten statischen Rührers (30) umfasst.

20. Das Verfahren zur Herstellung des Asphalt Mischkonditionierers gemäß Anspruch 19, **dadurch gekennzeichnet, dass** die mindestens eine Kolloidmühle (31) aus zwei oder mehr Kolloidmühlen (31) besteht, die parallel untereinander angeordnet sind.

## Revendications

1. Conditionneur de mélange asphaltique **caractérisé en ce qu'**il comprend :
a) un bitume ayant une viscosité dynamique égale ou supérieure à 35 000 cP (35 Pa.s), mesurée à 60 °C, et une densité API égale ou supérieure à 10 degrés, dans lequel le bitume est en une quantité allant de 50 à 75 % en poids total dudit conditionneur de mélange asphaltique ;
b) un polyol ayant de 2 à 8 atomes de carbone, en une quantité allant de 2 à 6 % en poids total dudit conditionneur de mélange asphaltique ;
c) un tensioactif, dans lequel le tensioactif comprend un tensioactif cationique, un tensioactif non ionique, ou une combinaison quelconque de ceux-ci, en une quantité allant de 0,05 à 0,4 % en poids total dudit conditionneur de mélange asphaltique ;
d) un acide minéral, en une quantité pour ajuster le pH de la phase aqueuse dans le conditionneur de mélange asphaltique dans la plage allant d'environ 2 à environ 4 ;
e) de l'eau, en une quantité pour compléter le conditionneur de mélange asphaltique.

2. Conditionneur de mélange asphaltique selon la revendication 1, **caractérisé par le fait que** le bitume est en une quantité allant de 60 à 70 % en poids total dudit conditionneur de mélange asphaltique.

3. Conditionneur de mélange asphaltique selon l'une quelconque des revendications 1 et 2, **caractérisé par le fait que** le polyol est en une quantité allant de 2 à 4 % en poids total dudit conditionneur de mélange asphaltique.

4. Conditionneur de mélange asphaltique selon l'une quelconque des revendications 1 à 3, **caractérisé par le fait que** le polyol a une chaîne linéaire et de 3 à 6 atomes de carbone.

5. Conditionneur de mélange asphaltique selon l'une quelconque des revendications 1 à 3, **caractérisé par le fait que** le polyol est au moins un sélectionné parmi le groupe constitué de propylène glycol, de dipropylène glycol, de 1,3-butylène glycol, de pentylène glycol, de glycérol, de diglycérol et de leurs combinaisons.

6. Conditionneur de mélange asphaltique selon l'une quelconque des revendications 1 à 5, **caractérisé par le fait que** le tensioactif est en une quantité allant de 0,1 à 0,3 % en poids total dudit conditionneur de mélange asphaltique.

7. Conditionneur de mélange asphaltique selon l'une quelconque des revendications 1 à 6, **caractérisé par le fait que** l'acide minéral est au moins un sélectionné parmi le groupe constitué d'acide chlorhydrique, d'acide nitrique, d'acide sulfurique et de leurs combinaisons.

8. Mélange de pavage asphaltique conditionné **caractérisé en ce qu'**il comprend :
a) un conditionneur de mélange asphaltique, selon l'une quelconque des revendications 1 à 7, en une quantité allant de 1 à 5 % en poids total dudit mélange de pavage asphaltique conditionné, dans lequel le bitume compris dans ledit conditionneur de mélange asphaltique est une première portion de bitume ;
b) une deuxième portion de bitume ayant une viscosité dynamique égale ou supérieure à 35 000 cP (35 Pa.s), mesurée à 60 °C, et une densité API égale ou supérieure à 10 degrés, dans laquelle la deuxième portion de bitume est en une quantité allant de 2 à 8 % en poids total dudit mélange de pavage asphaltique conditionné ;
c) granulat, en une quantité allant de 87 à 97 % en poids total dudit mélange de pavage asphaltique conditionné.

9. Mélange de pavage asphaltique conditionné selon la revendication 8, **caractérisé par le fait que** le conditionneur de mélange asphaltique est en une quantité allant de 1,5 à 3,5 % en poids total dudit mélange de pavage asphaltique conditionné.

10. Mélange de pavage asphaltique conditionné selon l'une quelconque des revendications 8 et 9, **caractérisé par le fait que** la deuxième portion de bitume est en une quantité allant de 3,5 à 6,5 % en poids total dudit mélange de pavage asphaltique conditionné.

11. Mélange de pavage asphaltique conditionné selon l'une quelconque des revendications 8 à 10, **caractérisé par le fait que** le granulat est en une quantité allant de 93 à 96% en poids total dudit mélange de pavage asphaltique conditionné.

12. Mélange de pavage asphaltique conditionné selon l'une quelconque des revendications 8 à 11, **caractérisé par le fait que** le granulat comprend un élément sélectionné parmi le groupe constitué de granulat à haute densité, de granulat à granulométrie discontinue, de granulat à granulométrie étalée, de granulat à matrice pierreuse, de matériau de pavage en asphalte récupéré, et de leurs combinaisons.

13. Surface pavée **caractérisée en ce qu'**elle comprend une couche du mélange de pavage asphaltique conditionné selon l'une quelconque des revendications 8 à 12.

14. Procédé de production du mélange de pavage asphaltique conditionné selon l'une quelconque des revendications 8 à 12, **caractérisé en ce qu'**il comprend les étapes de :
a. la fourniture d'un mélange d'un polyol, d'un tensioactif, d'un acide minéral et d'eau, dans lequel le mélange se produit à une température dans une plage allant de 70 à 80 °C ;
b. la fourniture d'un mélange de la composition, obtenue à l'étape a), avec une première portion de bitume, ayant une viscosité dynamique égale ou supérieure à 35 000 cP (35 Pa.s), mesurée à 60 °C, et une densité API égale ou supérieure à 10 degrés, dans lequel la première portion de bitume est à une température dans une plage allant de 100 à 150 °C, obtenant le conditionneur de mélange asphaltique selon l'une quelconque des revendications 1 à 7 ;
c. la réduction de la température du conditionneur de mélange asphaltique, obtenu à l'étape b), à la température ambiante ;
d. la fourniture d'un mélange d'une deuxième portion de bitume ayant une viscosité dynamique égale ou supérieure à 35 000 cP (35 Pa.s), mesurée à 60 °C, et une densité API égale ou supérieure à 10 degrés avec le granulat, dans lequel le mélange se produit à une température allant de 130 °C à 170 °C ;
e. la fourniture d'un mélange du mélange asphaltique, obtenu à l'étape c), qui est maintenu à température ambiante, avec le mélange de l'étape d), dans lequel le mélange final est maintenu dans une plage de température allant de 130 °C à 170 °C, résultant en le mélange de pavage asphaltique conditionné;
f. la réalisation d'un refroidissement contrôlé du mélange de pavage asphaltique conditionné, obtenu à l'étape e), jusqu'à température ambiante ;
g. le stockage du mélange de pavage asphaltique conditionné, obtenu à l'étape f) à température ambiante jusqu'à son application sur une surface à paver.

15. Procédé de production du mélange de pavage asphaltique conditionné selon la revendication 14, **caractérisé par le fait que** le mélange de pavage asphaltique conditionné est chauffé à une plage de température de compactage allant de 130 °C à 170 °C, avant d'être appliqué sur une surface à paver, lorsque le mélange de pavage asphaltique conditionné est préalablement stocké à température ambiante.

16. Procédé de production du mélange de pavage asphaltique conditionné selon l'une quelconque des revendications 14 ou 15, **caractérisé par le fait que** le refroidissement contrôlé du mélange de pavage asphaltique conditionné de l'étape f) comprend le refroidissement du mélange de pavage asphaltique conditionné à un taux de refroidissement directement proportionnel au taux de production du mélange de pavage asphaltique conditionné.

17. Utilisation du mélange de pavage asphaltique conditionné selon l'une quelconque des revendications 8 à 12, **caractérisée en ce qu'**elle l'est dans le pavage d'une surface.

18. Procédé de production du conditionneur de mélange asphaltique selon l'une quelconque des revendications 1 à 7 avec un système **caractérisé en ce qu'**il comprend :
a. un réservoir de mélange (28) pour fournir un mélange d'un polyol, d'un tensioactif, d'un acide minéral et d'eau ;
b. un réservoir de bitume ayant un dispositif de chauffage (29) ;
c. une zone de mélange pour fournir le mélange de la solution aqueuse comprenant le polyol, le tensioactif, l'acide minéral et l'eau avec le bitume, résultant en le conditionneur de mélange asphaltique (9) ;
d. au moins un échangeur de chaleur (32) pour refroidir le conditionneur de mélange asphaltique (9), obtenu à l'étape c), à la température ambiante ;
e. au moins un réservoir de stockage (33) pour stocker le conditionneur de mélange asphaltique (9).

19. Procédé de production du conditionneur de mélange asphaltique selon la revendication 18, **caractérisé par le fait que** la zone de mélange de l'étape c) comprend une succession d'un premier agitateur statique (30), d'au moins un broyeur colloïdal (31), et d'un deuxième agitateur statique (30).

20. Procédé de production du conditionneur de mélange asphaltique selon la revendication 19, **caractérisé par le fait que** l'au moins un broyeur colloïdal (31) comprend deux broyeurs colloïdaux (31) ou plus, disposés en parallèle entre eux.
